# EUROPEAN PATENT SPECIFICATION

(11) **EP 2 133 525 B1**
(45) Date of publication and mention of the grant of the patent: **09.07.2014**
(21) Application number: 08739850.9
(22) Date of filing: 28.03.2008
(51) Int. Cl.: F01N 3/08, B01D 53/44, B01D 53/56, B01D 53/62, B01D 53/74, B01D 53/86, F01N 3/28

(54) **EXHAUST GAS PURIFYING APPARATUS**
ABGASREINIGUNGSGERÄT
APPAREIL DE PURIFICATION DE GAZ D'ÉCHAPPEMENT

(30) Priority: 30.03.2007 JP 2007093716
(43) Date of publication of application: 16.12.2009
(73) Proprietor: National University Corporation Toyohashi University of Technology, Toyohashi-shi, Aichi 441-8580 (JP); TOYOTA JIDOSHA KABUSHIKI KAISHA, Toyota-shi, Aichi-ken, 471-8571 (JP)
(72) Inventor: MIZUNO, Akira, Toyohashi-shi Aichi 441-8580 (JP); SATO, Satoshi, Toyohashi-shi Aichi 441-8580 (JP); YAMAUCHI, Hiroki, Toyohashi-shi Aichi 441-8580 (JP); TOUCHARD, Gerard, 86550 Mignoloux-Beauvoir (FR); MATSUBARA, Hiroyuki, Toyota-shi Aichi 471-8571 (JP)
(74) Representative: Smith, Samuel Leonard
(86) International application number: PCT/JP2008/056743
(87) International publication number: WO 2008/120819

(56) References cited:
- EP-A2- 1 130 231
- WO-A1-00/71867
- JP-A- 2003 301 711
- JP-A- 2005 320 895
- JP-A- 2006 132 483
- US-A1- 2003 150 709
- US-A1- 2005 118 079

## Description

### TECHNICAL FIELD

The present invention relates to a novel exhaust gas purification device and, more specifically, it relates to an exhaust gas purification device that can form uniform discharge plasma in hollow tubes in a honeycomb structure by a novel plasma discharge technique.

### BACKGROUND ART

In recent years, there has been a problem with global warming due to carbon dioxide and, in order to reduce the output of carbon dioxide from car exhaust gas, there has been developed a lean burn engine that uses lean burn combustion to burn fuel in air with excessive oxygen.

On the other hand, as three-way catalysts for purifying the exhaust gas discharged from internal combustion engines such as car gasoline engines by converting carbon monoxide (CO), nitrogen oxides (NOx) and unburned hydrocarbons (HC) included in the exhaust gas into carbon dioxide, nitrogen and water, there are known various supported catalysts that are precious metal catalysts supported on metal oxide carriers.

These exhaust gas purification catalysts are typically supported on honeycomb structured base materials such as cordierite.

The honeycomb structure is comprised of an electrically insulating porous base material that has pores each having an average diameter of the order of about 15 - 25 µm.

In order to improve the performance of the catalyst supported on the honeycomb structure, various attempts have been made to improve materials constituting the honeycomb structure.

For example, it is known that the purification performance of the exhaust gas purification catalyst is improved by providing a compact layer such as titania, alumina and zirconia between the base material such as the cordierite honeycomb structure and a carrier layer supporting the catalyst.

However, the requirements for reduction of fuel consumption and environmental criteria have tended to become stricter and stricter from the viewpoint of prevention of global warming and, therefore, further improvement of the purification performance for the exhaust gas of the internal combustion engine is required.

To this end, various proposals have been made for improving exhaust gas purification performance.

For example, Japanese Unexamined Patent Publication No. 2004-19534 describes a diesel engine exhaust gas purification device including a discharge electrode and a counter electrode supporting a catalyst thereon, wherein particulates (particulate matter, PM) from the diesel engine and the like are collected by discharge between the electrodes and the PM is burned by the catalyst supported on an exhaust gas passage surface. However, the applied voltage described as a specific example in said patent specification is a pulse voltage between the anode electrode and the cathode electrode for collecting the PM by the effect of the discharge and, therefore, AC voltage that collects and releases the PM is not likely to be used here.

Further, Japanese Unexamined Patent Publication No. 2004-27982 describes a discharge device for purifying exhaust gas that converts components in the exhaust gas to different components with the effect of discharge, wherein an anode electrode and a cathode electrode are disposed on respective end surfaces of an insulating structure that has a plurality of exhaust gas passages extending in parallel with each other so that, when a voltage is applied between the electrodes, the discharge, for example, plasma discharge occurs along the exhaust gas passages in the insulating structure, and a plurality of openings are provided in the electrodes so that the surface area of the cathode is larger than that of the anode. However, in the discharge device described as a specific example in said patent publication, the applied voltage is not uniform in the cross-sectional direction and uniform plasma discharge is not described in this patent publication.

Still further, Japanese Unexamined Patent Publication No. 2004-239257 describes an exhaust gas purification device for an internal combustion engine and the like that includes electrodes and an insulating honeycomb structure, wherein the electrodes form an electric field that is not in parallel with the direction of a gas flow circulating in the honeycomb structure. However, the applied voltage described as a specific example in said patent specification aims at collection of PM with the effect of the discharge and, therefore, similarly to the device of Japanese Unexamined Patent Publication No. 2004-19534, AC voltage that collects and releases the PM is not likely to be used here. Similar systems are known from the documents WO 00/71867 A1 or EP 1130231 A1.

### SUMMARY OF INVENTION

As described above, though attempts have been made to improve the performance of an exhaust gas purification device by combined use of the honeycomb structure and electrode discharge, these attempts have not been satisfactory.

In order to generate uniform discharge in a large number of minute spaces by applying plasma discharge that is widely used at present, such as barrier discharge and surface discharge, for example, to the exhaust gas purification honeycomb structure, each space needs its own pair of electrodes. Therefore, it is difficult to generate a uniform plasma discharge in the large number of minute spaces in the honeycomb structure.

In view of the above problem, it is an object of the present invention to provide an exhaust gas purification device that can obtain uniform plasma discharge inside a large number of minute spaces in a honeycomb structure.

The present invention relates to an exhaust gas purification device including: a plasma generating section; an electrode for drawing plasma generated inside the device out of the plasma generating section; and a honeycomb structure between the plasma generating section and the electrode, wherein the exhaust gas purification device is configured so that the direction of exhaust gas flowing through hollow tubes in the honeycomb structure is identical to the connecting direction between the plasma generating section and the electrode. According to the present invention, there can be obtained an exhaust gas purification device that can generate plasma discharge uniformly in a large number of minute spaces in the honeycomb structure with the help of a simple electrode structure.

In the present invention, the fact that the direction of the exhaust gas flowing through hollow tubes in the honeycomb structure is identical to the connecting direction between the plasma generating section and the electrode means that the connecting direction between the plasma generating section and the electrode is substantially in parallel with the direction of the gas flowing in the hollow tubes in the honeycomb structure. However, if plasma discharge can be obtained in the minute spaces in the honeycomb structure, these two directions may not always be in parallel with each other.

### BRIEF DESCRIPTION OF DRAWINGS

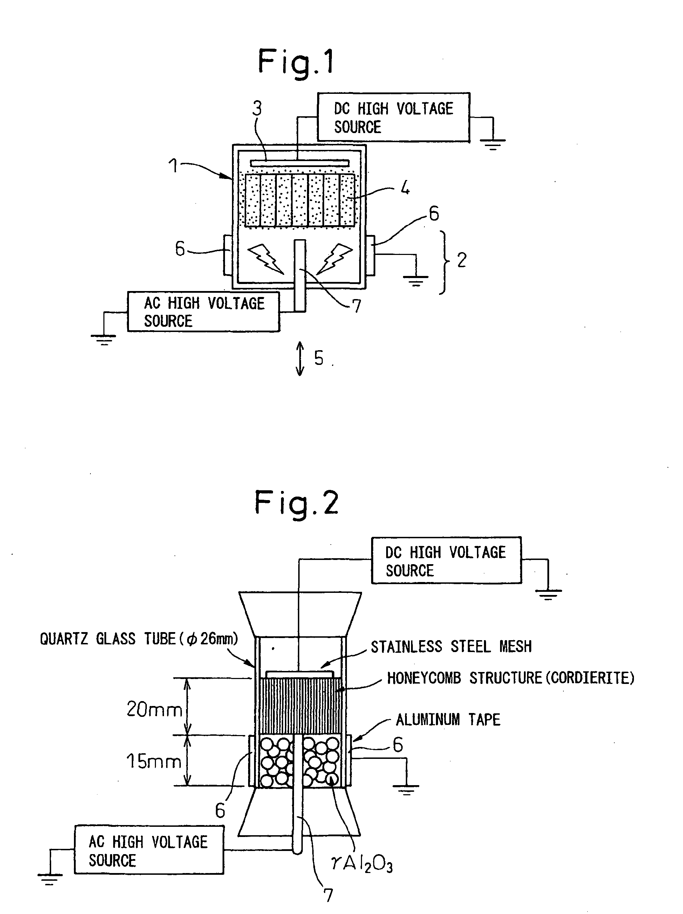

Fig. 1 is a cross-sectional schematic view of an example of an exhaust gas purification device of the present invention;
Fig. 2 is a cross-sectional schematic view of an exhaust gas purification device of an embodiment of the present invention;

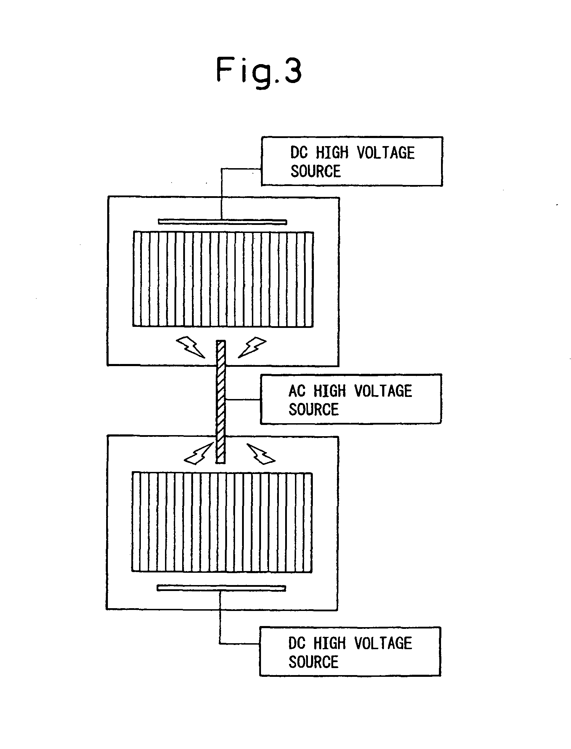

Fig. 3 is a schematic diagram of an example of an exhaust gas purification device of the present invention in which two devices of Fig. 1 are arranged in series;

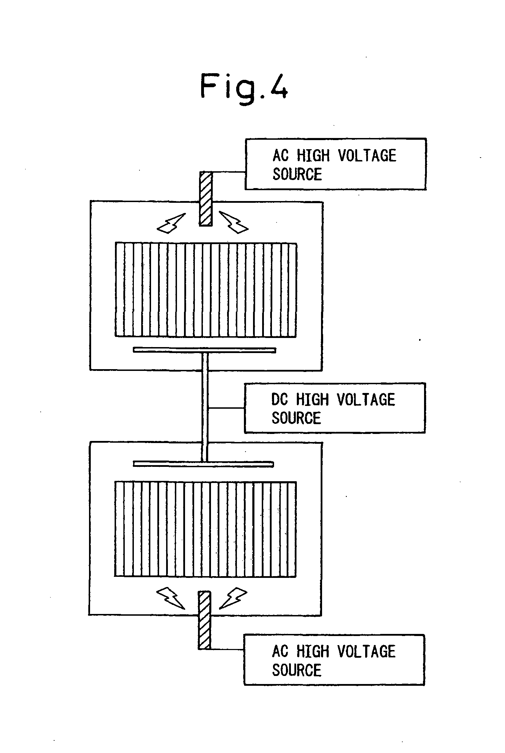

Fig. 4 is a schematic diagram of another example of an exhaust gas purification device of the present invention, in which two devices of Fig. 1 are arranged in series;

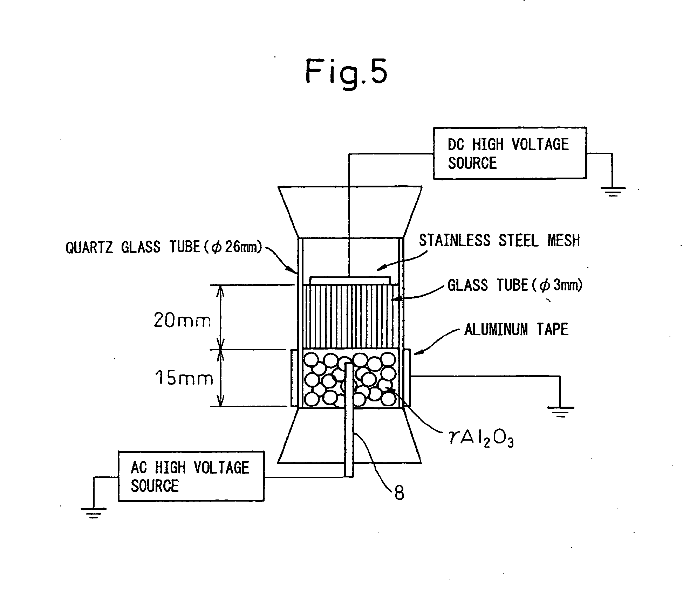

Fig. 5 is a schematic diagram of a plasma discharge device in which transparent glass tubes are used in place of a honeycomb structure;

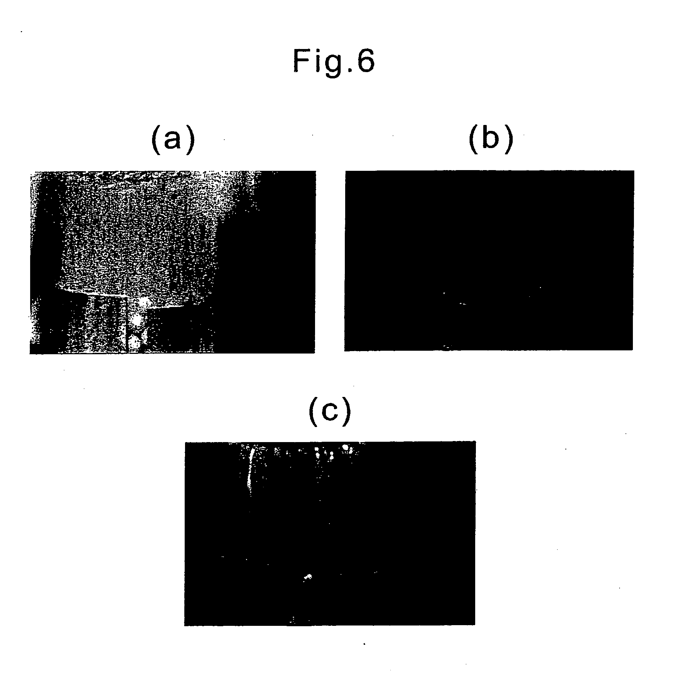

Figs. 6(a) - 6(c) are photographs illustrating discharge states by using the plasma discharge device of Fig. 5, wherein Figs. 6(a), 6(b) and 6(c) illustrate a state when no voltage is applied, a state when only AC high voltage is applied, and a state when both AC high voltage and DC high voltage are applied, respectively;

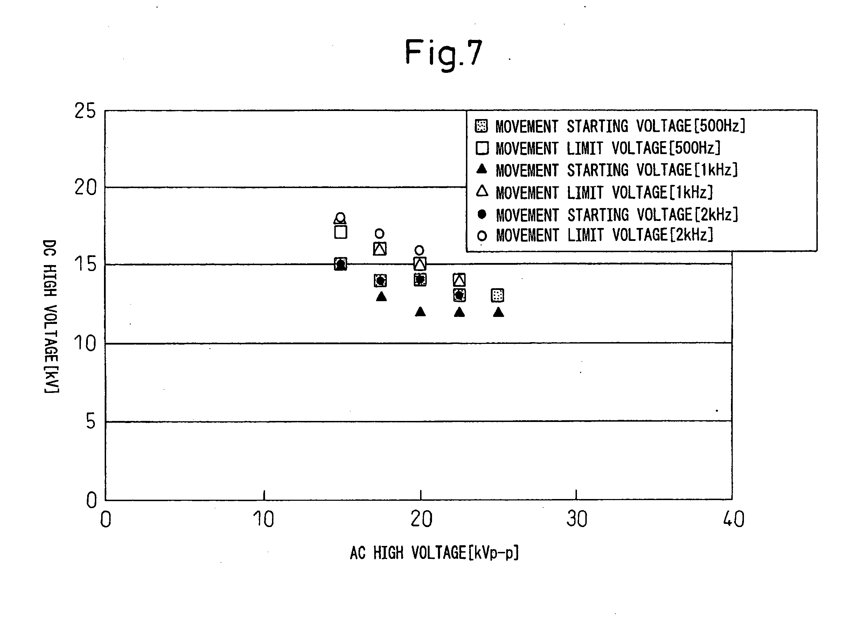

Fig. 7 illustrates a relationship between AC high voltage and DC high voltage that is required for generating discharge plasma across all glass tubes, wherein DC high voltage (positive polarity) is applied and each glass tube has a diameter of 3 mm and a length of 2 cm;

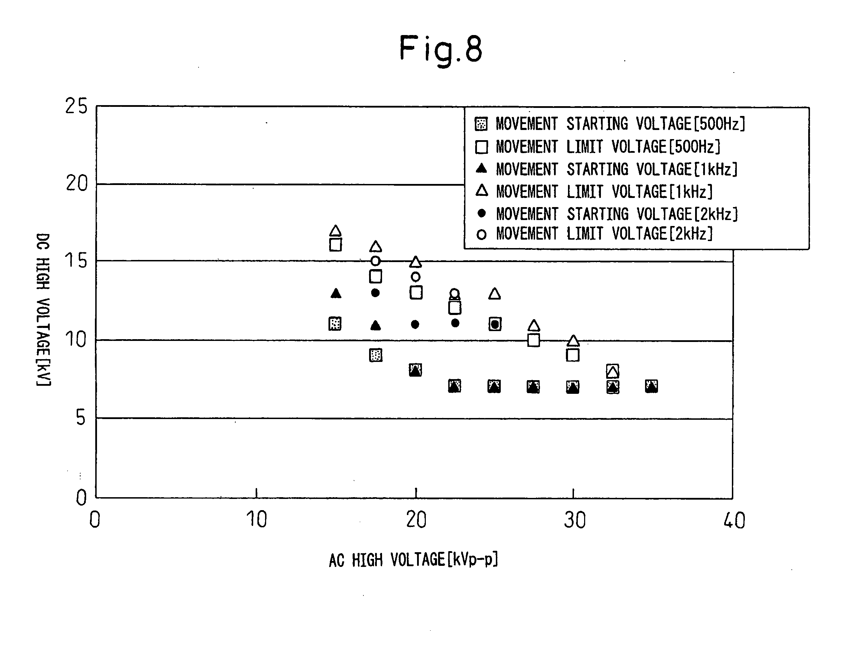

Fig. 8 illustrates a relationship between AC high voltage and DC high voltage that is required for generating discharge plasma across all glass tubes when the shape of the glass tube is changed, wherein DC high voltage (positive polarity) is applied and each glass tube has a diameter of 2 mm and a length of 2 cm;

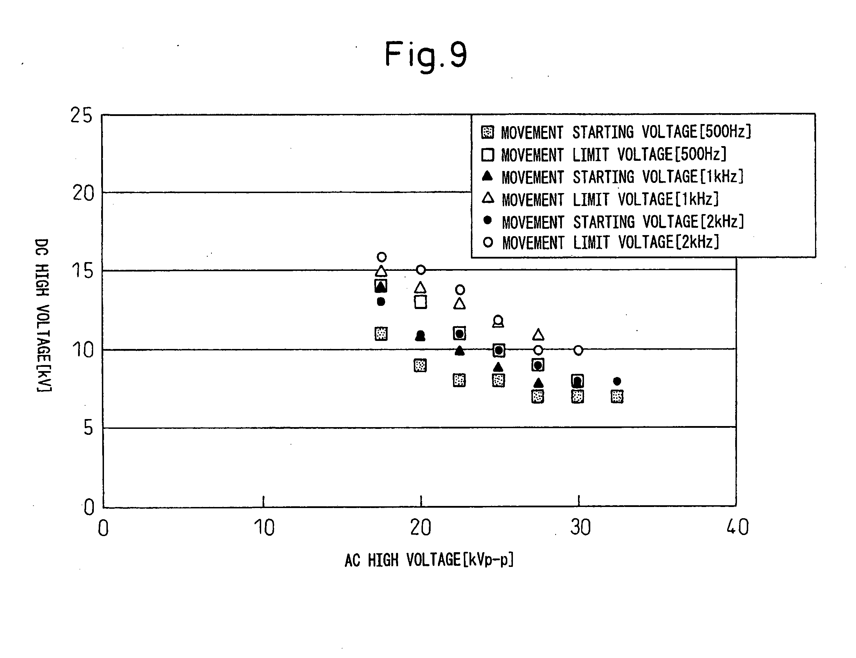

Fig. 9 illustrates a relationship between AC high voltage and DC high voltage that is required for generating discharge plasma across all glass tubes when the shape of the glass tube is changed, wherein DC high voltage (positive polarity) is applied and each glass tube has a diameter of 1 mm and a length of 2 cm;

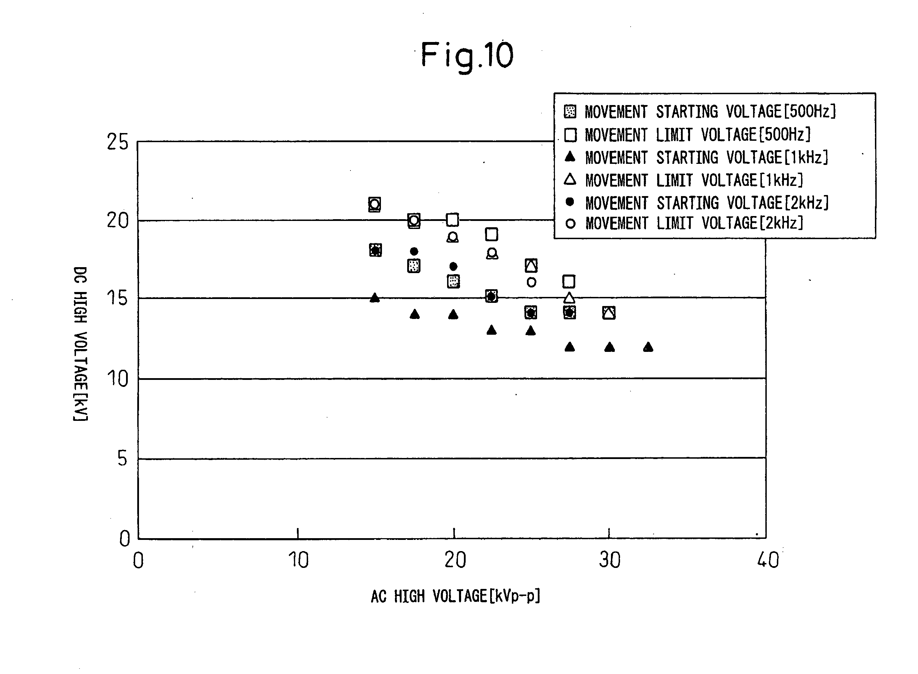

Fig. 10 illustrates a relationship between AC high voltage and DC high voltage that is required for generating discharge plasma across all glass tubes when the shape of the glass tube is changed, wherein DC high voltage (positive polarity) is applied and each glass tube has a diameter of 3 mm and a length of 3 cm;

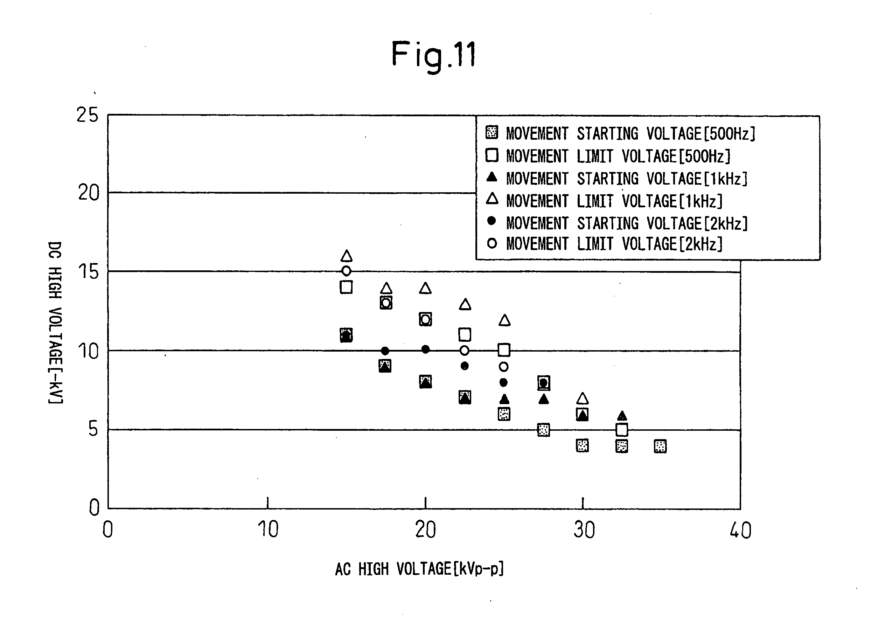

Fig. 11 illustrates a relationship between AC high voltage and DC high voltage that is required for generating discharge plasma across all glass tubes when the shape of the glass tube is changed and the polarity of the DC high voltage is changed from positive to negative, wherein DC high voltage (negative polarity) is applied and each glass tube has a diameter of 3 mm and a length of 2 cm;

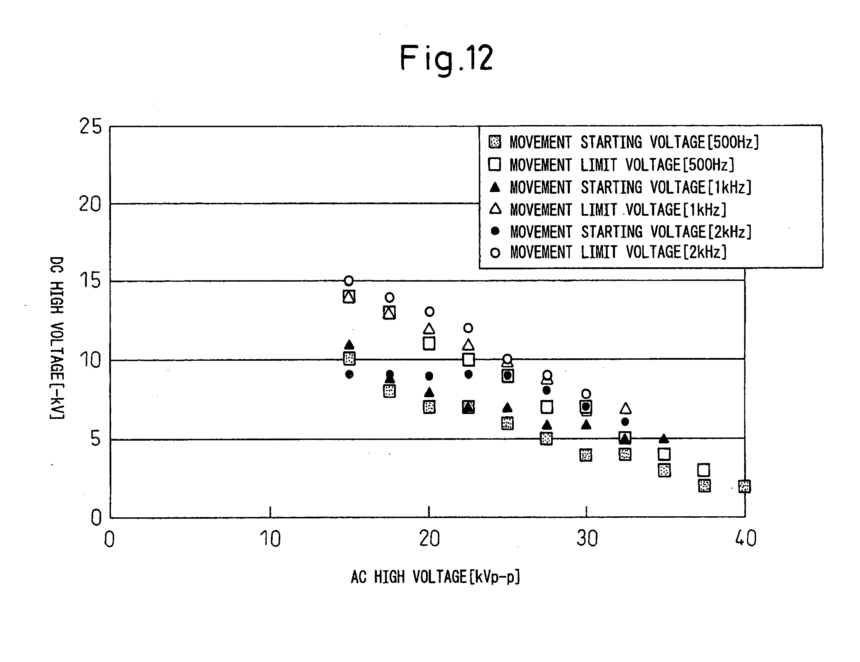

Fig. 12 illustrates a relationship between AC high voltage and DC high voltage that is required for generating discharge plasma across all glass tubes when the shape of the glass tube is changed and the polarity of the DC high voltage is changed from positive to negative, wherein DC high voltage (positive polarity) is applied and each glass tube has a diameter of 2 mm and a length of 2 cm;

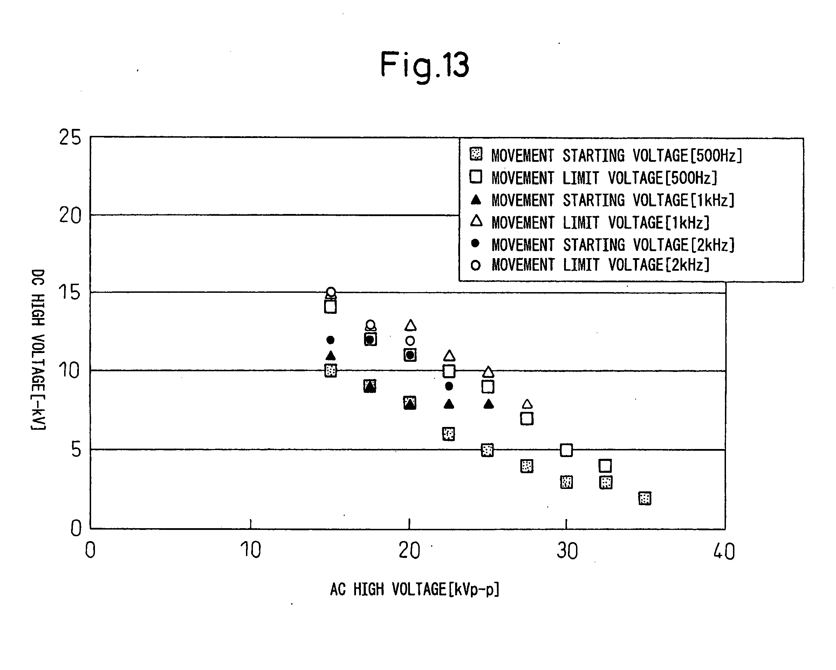

Fig. 13 illustrates a relationship between AC high voltage and DC high voltage that is required for generating discharge plasma across all glass tubes when the shape of the glass tube is changed and the polarity of the DC high voltage is changed from positive to negative, wherein DC high voltage (positive polarity) is applied and each glass tube has a diameter of 1 mm and a length of 2 cm; and

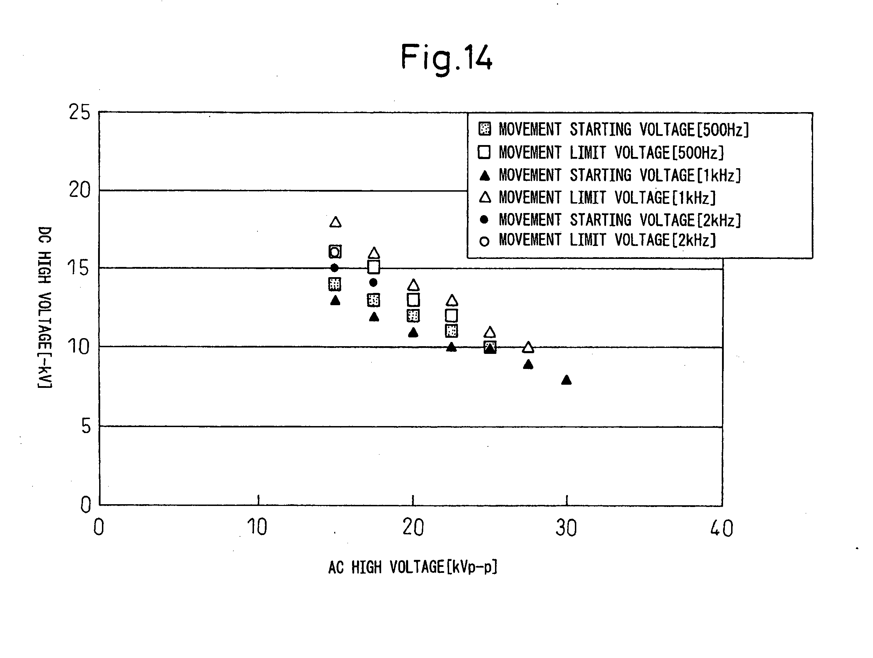

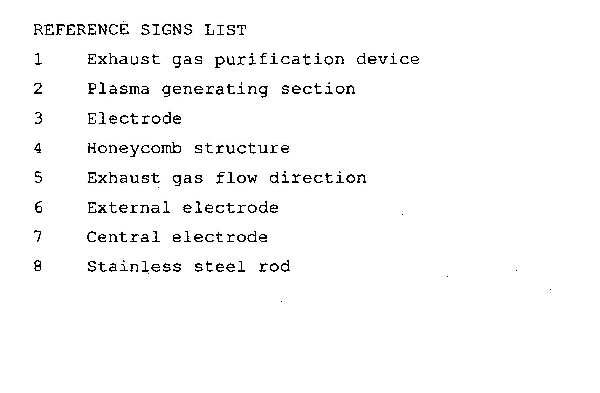

Fig. 14 illustrates a relationship between AC high voltage and DC high voltage that is required for generating discharge plasma across all glass tubes when the shape of the glass tube is changed and the polarity of the DC high voltage is changed from positive to negative, wherein DC high voltage (positive polarity) is applied and each glass tube has a diameter of 3 mm and a length of 3 cm.

### DESCRIPTION OF EMBODIMENTS

Preferred embodiments of the present invention will be illustrated as follows:
1) said exhaust gas purification device in which a catalyst is supported inside a honeycomb structure;
2) said exhaust gas purification device in which a voltage of negative polarity is applied to an electrode; and
3) said exhaust gas purification device in which an electric field is a DC electric field generated by high voltage; and
4) said exhaust gas purification device in which a plurality of devices are arranged in series.

Hereinafter, the present invention will be described by using Figs. 1 and 2, wherein Fig. 1 is a cross-sectional schematic view of an example of an exhaust gas purification device of the present invention, and Fig. 2 is a cross-sectional schematic view of an exhaust gas purification device of an embodiment of the present invention.

In Fig. 1, an exhaust gas purification device 1 includes: a plasma generating section 2; an electrode 3 for drawing plasma generated inside the device out of the plasma generating section; and a honeycomb structure 4 between the plasma generating section and the electrode, wherein the exhaust gas purification device is configured so that an exhaust gas flow direction 5 is identical to the connecting direction between the plasma generating section and the electrode, and wherein exhaust gas enters an exhaust gas inlet (not illustrated), flows through hollow tubes in the honeycomb structure and flows out from an exhaust gas outlet (not illustrated).

The plasma in the present invention is non-thermal equilibrium plasma without heat loss.

For example, as illustrated in Fig. 1, said plasma generating section 2 consists of an AC high voltage source, an external electrode 6 and a central electrode 7. The plasma generated by plasma generating section 2 is slid into the entire honeycomb structure by an electric field of electrode 3 connected to the DC high voltage source, for example, and the plasma is drawn out of the region where the electric field is generated.

Though AC discharge is illustrated as the plasma in Fig. 1, the plasma is not limited to AC discharge, and may be either surface discharge or packed bed discharge.

The high voltage used for displacing the plasma discharge area is not limited to DC high voltage.

Further, said honeycomb structure 4 may be comprised of honeycomb units made of any heat-resistant porous base material each of which is quadrangular (square, for example), hexagonal or circular in cross section and each of which has a linear hollow portion and, preferably, a support medium is provided inside the honeycomb structure.

Said heat resistant porous base material may be cordierite.

In Fig. 2, in the exhaust gas purification device, the honeycomb structure (made of cordierite, for example) having a large number of holes, each of a few mm diameter, is disposed inside a quartz glass tube (of 26 mm diameter, for example). A space ahead of the honeycomb structure is filled with dielectric pellets (y-Al₂O₃, for example). A stainless steel mesh is disposed atop the honeycomb structure as the electrode to which DC voltage from the DC high voltage source is applied. By means of the AC high voltage source, external electrode 6 (an aluminum tape, for example) and central electrode 7, packed bed discharge is generated by applying AC voltage, desirably high frequency voltage, so as to generate discharge plasma inside the honeycomb structure.

The exhaust gas purification device of the present invention may be applied to a gasoline or diesel engine, wherein exhaust gas from the engine is passed through the discharge space. By using the honeycomb structure supporting the catalyst, the contact area between the gas and the catalyst can be increased and a reaction can be performed more efficiently with the effect of the discharge plasma.

As said catalyst, any exhaust gas treatment catalysts may be used. Further, any catalyst adjuvant such as alkali may be used with the catalyst.

Also, in order to enhance the function of the honeycomb structure, said compact layer such as titania, alumina and zirconia may be applied.

As a result of the plasma discharge, oxygen entrained in the exhaust gas can be activated and changed into active oxygen (O₂ is changed into O₃), and NO (changed into NO₂), PM (changed into CO₂), carbon monoxide (changed into CO₂) and unburned hydrocarbons (changed into CO₂ and H₂O) can be purified.

By virtue of this reaction, components to be treated in the exhaust gas can be purified. Here, the gas to be treated is not limited to the exhaust gas, but may be indoor air and the like.

In the present invention, the honeycomb structure supporting the catalyst is preferably used so that the contact area between the gas and the catalyst can be increased and the reaction can be performed more efficiently with the effect of the discharge plasma. As a result of this reaction, the substances to be treated in the exhaust gas can be purified.

When the exhaust gas purification device of the present invention is applied to actual apparatuses, said device illustrated in Fig. 1 may be applied without change as needed, or two devices may be arranged so that at least one of the plasma generating section and the electrode is shared by the two devices and, in the latter case, the exhaust gas treated in the first device is preferably circulated into the second device through a connecting tube in succession.

### EXAMPLES

Hereinafter, the present invention will be described in more detail, based on specific examples.

In the exhaust gas purification device of the present invention, in order to observe discharge states, the device illustrated in Fig. 5 using clear glass tubes in place of the opaque honeycomb structure for gas purification was used to observe the plasma discharge and perform evaluations.

As shown in Fig. 5, the packed bed discharge in the space ahead of the honeycomb structure was adopted. A quartz glass tube of 26 mm inner diameter simulating the device was filled with pellets of γ-Al₂O₃, an aluminum tape was provided on an outer circumference of the quartz glass tube as the external electrode, and a stainless steel rod 8 (of 6 mm diameter) was provided at the center of the quartz glass tube as the discharge electrode. The length of the packed bed discharge space was 20 mm. Here, the thin glass tubes tied in a bundle were used as minute spaces in the honeycomb structure. The inner diameter of each glass tube used here was 1, 2 or 3 mm, and its length was 20 or 30 mm. A stainless steel mesh of 16 mesh sizes was disposed atop the glass tubes as the electrode for moving the discharge space by applying DC high voltage. Intense discharge plasma was formed at the pellet contacts by the packed bed discharge and the discharge plasma was moved into the glass tubes by the DC high voltage applied to the stainless steel mesh electrode.

Figs. 6(a) - 6(c) are photographs illustrating discharge states. Figs. 6(a), 6(b) and 6(c) illustrate a state before applying the voltage, a state when only the packed bed discharge occurred, and a state when the DC high voltage was applied in addition to the packed bed discharge, respectively. A voltage of 24 kVₚ₋ₚ at 1 kHz was applied for the packed bed discharge and a DC high voltage of 16kV was applied.

In Fig. 6(b), the discharge occurred only in the packed bed discharge section to which the AC high voltage was applied and violet light emission from the packed bed discharge section could be confirmed. When the DC high voltage was applied in addition to the packed bed discharge, as illustrated in Fig. 6(c), violet light emission and, therefore, uniform discharge across all the glass tubes could be confirmed. As the DC voltage was increased gradually, it could be confirmed that the discharge occurring in the packed bed discharge section expanded into the glass tubes. From these facts, it was confirmed that the discharge occurring in the packed bed discharge section was introduced into the glass tubes.

Next, a relationship between the AC high voltage applied for the packed bed discharge and the DC high voltage applied for sliding was considered. Here, assuming application of the device to gas treatment, indoor air was introduced into the reactor at a flow rate of 5 L/min.

Figs. 7 - 14 illustrate relationships between the AC high voltage and the DC high voltage that were required for generating discharge plasma across all the glass tubes. Here, while the DC high voltage was fixed, by gradually changing the AC high voltage, voltages when the discharge plasma generated in the packed bed discharge section started to expand into the glass tubes and when spark discharge occurred and the application of the DC high voltage became impossible were measured. Further, change depending on the frequency of the AC high voltage was measured. A comparison was made between positive and negative polarities of the applied DC high voltage and, further, measurements were performed by changing the diameter and length of each glass tube.

In the figures, the term "movement starting voltage" refers to the voltage when the discharge starts to move from the state of Fig. 6(b) to the state of Fig. 6(c).

On the other hand, the term "movement limit voltage" refers to the voltage when electric energy due to the discharge started to turn into sparks.

As illustrated in Figs. 7 - 10, when the DC high voltage of positive polarity was applied, it was found that the starting voltage described above converged to a certain value with the increase of the AC high voltage. When the AC high voltage was constant, the range of the DC voltage for stable existence of the discharge plasma in the glass tubes (or, in other words, the range between the starting voltage and the limit voltage) did not depend on the inner diameter of each glass tube. In contrast, when the DC high voltage of negative polarity was applied, the starting voltage decreased smoothly with the increase of the AC high voltage. Further, it was confirmed that the discharge became more intense with the increase in the diameter of each glass tube.

When a comparison was made by changing the length of each glass tube, it was confirmed that the starting voltage increased as the glass tube became longer. On the other hand, the discharge with more intense light emission was confirmed as the glass tube became shorter.

Next, in the comparison between positive and negative polarities of the DC high voltage, it was confirmed that when the DC high voltage of positive polarity was applied, the range between the starting voltage and the limit voltage became larger and the discharge could be performed more stably in the glass tubes. On the other hand, it was confirmed that when the DC high voltage of negative polarity was applied, the discharge plasma occurred more intensely in the glass tubes.

When the DC high voltage of positive or negative polarity was applied, in either case, it was confirmed that as the frequency of the AC voltage applied for the packed bed discharge decreased, the discharge plasma occurred more intensely in the glass tubes.

From the above results, it was demonstrated that the discharge plasma system in the present invention could form a stable plasma discharge in a large number of insulating hollow tubes with a wide range of AC high voltage (about 10 - about 40 kV, for example) and a wide range of DC high voltage (about 2 - about 20 kV, for example) and achieve exhaust gas purification performance as both the honeycomb structure and the plasma discharge device when it was used in the exhaust gas purification device.

### INDUSTRIAL APPLICABILITY

According to the present invention, there can be obtained an exhaust gas purification device that can generate plasma discharge uniformly in a large number of minute spaces in the honeycomb structure using of a simple electrode structure and improve the purification effect by combined use of the purification functions of the honeycomb structure and the discharge plasma. As a result, the exhaust gas purification device of the present invention is preferably used as a purification device for exhaust gas exhausted from a internal combustion engine such as an automobile gasoline engine in order to contribute to improvement of the exhaust gas purification performance.

## Claims

1. An exhaust gas purification device (1) including: a plasma generating section (2); an electrode (3) for drawing plasma generated inside said device (1) out of said plasma generating device; and a honeycomb structure (4) between said plasma generating section (2) and said electrode (3), wherein a direction of exhaust gas flowing through hollow tubes in said honeycomb structure (4) is identical to a connecting direction between said plasma generating section (2) and said electrode (3).

2. An exhaust gas purification device according to claim 1, wherein a catalyst is supported inside said honeycomb structure (4).

3. An exhaust gas purification device according to claim 1, wherein a voltage of negative polarity is applied to said electrode (3).

## Patentansprüche

1. Abgasreinigungseinrichtung (1) mit einem Plasmaerzeugungsabschnitt (2); einer Elektrode (3) zum Abziehen von Plasma, das innerhalb der Einrichtung (1) erzeugt wird, aus der Plasmaerzeugungseinrichtung; sowie einer Wabenstruktur (4) zwischen dem Plasmaerzeugungsabschnitt (2) und der Elektrode (3), wobei eine Richtung des durch Hohlröhren in der Wabenstruktur (4) strömenden Abgases identisch mit einer Verbindungsrichtung zwischen dem Plasmaerzeugungsabschnitt (2) und der Elektrode (3) ist.

2. Abgasreinigungseinrichtung nach Anspruch 1, wobei ein Katalysator innerhalb der Wabenstruktur (4) gehalten ist.

3. Abgasreinigungseinrichtung nach Anspruch 1, wobei eine Spannung negativer Polarität an die Elektrode (3) angelegt ist.

## Revendications

1. Dispositif de purification de gaz d'échappement (1) comprenant : une section de production de plasma (2), une électrode (3) pour extraire un plasma produit à l'intérieur dudit dispositif (1) dudit dispositif de production de plasma ; et une structure en nid d'abeilles (4) entre ladite section de production de plasma (2) et ladite électrode (3), dans lequel une direction des gaz d'échappement s'écoulant à travers des tubes creux dans ladite structure en nid d'abeilles (4) est identique à une direction de connexion entre ladite section de production de plasma (2) et ladite électrode (3).

2. Dispositif de purification de gaz d'échappement selon la revendication 1, dans lequel un catalyseur est supporté à l'intérieur de ladite structure en nid d'abeilles (4).

3. Dispositif de purification de gaz d'échappement selon la revendication 1, dans lequel une tension de polarité négative est appliquée à ladite électrode (3).
